# EUROPÄISCHE PATENTSCHRIFT

(11) **EP 2 928 127 B1**
(45) Veröffentlichungstag und Bekanntmachung des Hinweises auf die Patenterteilung: **12.06.2019**
(21) Anmeldenummer: 14163027.7
(22) Anmeldetag: 01.04.2014
(51) Int. Cl.: H04L 12/721, H04L 12/715

(54) **Verfahren und Telekommunikationsnetzwerk zur Optimierung des Routings eines Datenpakets, Computerprogramm und Computerprogrammprodukt**
Method and telecommunication network for optimising the routing of a data packet, computer program and a computer program product
Procédé et réseau de télécommunication destinés à optimiser le routage d'un paquet de données, programme informatique et produit de programme informatique

(43) Veröffentlichungstag der Anmeldung: 07.10.2015
(73) Patentinhaber: Deutsche Telekom AG, 53113 Bonn (DE)
(72) Erfinder: van den Berge, Fridtjof, 53227 Bonn (DE)
(74) Vertreter: Schwöbel, Thilo K.

(56) Entgegenhaltungen:
- DE-A1- 10 238 291
- US-A1- 2003 193 956
- RICARDO OLIVEIRA ET AL: "Geographically Informed Inter-Domain Routing", NETWORK PROTOCOLS, 2007. ICNP 2007. IEEE INTERNATIONAL CONFERENCE ON, IEEE, PI, 1. Oktober 2007 (2007-10-01), Seiten 103-112, XP031157043, ISBN: 978-1-4244-1587-8

## Beschreibung

### Stand der Technik

Die Erfindung betrifft ein Verfahren zur Optimierung des Routings eines Datenpakets in einem Telekommunikationsnetzwerk.

Die Erfindung betrifft ferner ein Telekommunikationsnetzwerk zur Optimierung des Routings eines Datenpakets in dem Telekommunikationsnetzwerk.

Es ist allgemein bekannt, Datenpakete - beispielsweise Internetprotokoll (IP-)Datenpakete - unter Verwendung von IP-Routingprotokollen über das Telekommunikationsnetzwerk - beispielsweise über das Internet - von einem Sendegerät an ein Empfangsgerät zu transportieren. Dabei werden in Abhängigkeit verschiedener Algorithmen, Austauschmechanismen und/oder Metriken Routingvorgaben für das weltweite Routing der Datenpakete erwirkt. Einige bekannte Protokolle sind beispielsweise das Gateway-to-Gateway Protokoll (GGP), das Open-Shortest-Path-First (OSPF) Protokoll, das Intermediate-System-to-Intermediate-System (IS-IS) Protokoll, das Routing-Information-Protokoll (RIP), das Border-Gateway Protokoll (BGP), das Interdomain-Routing Protokoll (IDRP) und/oder das Virtual-Private-Network (VPN) Protokoll. Beispielsweise werden mehrere solcher Routingprotokolle - insbesondere Interior-Gateway Protokolle (IGP) -für eine IP-Kommunikation innerhalb eines autonomen Systems (AS) - beispielsweise eines Local Area Networks (LAN) - eingesetzt, um Routingtabellen von Routern in automatisierter Weise zu erstellen. Die Netzwerkknoten des Telekommunikationsnetzwerkes - beispielsweise Router oder Gateways - sind dabei in der Lage, in Abhängigkeit der verwendeten IP-Protokolle die Topologie des Netzes zu erkennen.

Mit den aus dem Stand der Technik bekannten Ansätzen erfolgt das Routing der Datenpakete zwischen Sendegerät - welches das Datenpaket an das Telekommunikationsnetzwerk übermittelt - und Empfangsgerät - für welches das Datenpaket bestimmt ist - typischerweise über beliebige Netzwerkrouten innerhalb des IP-Telekommunikationsnetzwerkes. Dokument Network Protocols, 2007. ICNP 2007. IEEE international conference on, IEEE, pi Ricardo Oliveira et al. "Geographically Informed InterDomain Routing" offenbart hinzufügen geographischer Informationen einer IP-Adresse von eines Datenpakets.

### Offenbarung der Erfindung

Die Erfindung ist gemäß Anspruch 1 definiert. Ausführungsformen sind in abhängigen Ansprüchen definiert. Der Erfindung liegt daher die Aufgabe zugrunde, ein Verfahren und ein Telekommunikationsnetzwerk für das Routing eines Datenpakets von einem Sendegerät an ein Empfangsgerät anzugeben, wobei das Routing - insbesondere im Hinblick auf die durch das Telekommunikationsnetzwerk bestimmte Netzwerkroute zwischen Sendgerät und Empfangsgerät - optimiert wird.

Diese Aufgabe wird erfindungsgemäß durch ein Verfahren zur Optimierung des Routings eines Datenpakets in einem Telekommunikationsnetzwerk gelöst, wobei ein Sendegerät und ein Empfangsgerät mit dem Telekommunikationsnetzwerk verbunden sind, wobei das Telekommunikationsnetzwerk mehrere Teilnetze umfasst, wobei in einem ersten Verfahrensschritt das Datenpaket von dem Sendegerät an das Telekommunikationsnetzwerk übermittelt wird, wobei in einem zweiten Verfahrensschritt dem Datenpaket eine Netzidentifikationsinformation zur Identifikation eines Zielnetzes durch das Telekommunikationsnetzwerk hinzugefügt wird, wobei das Zielnetz ein mit dem Empfangsgerät assoziiertes Teilnetz der mehreren Teilnetze des Telekommunikationsnetzwerkes ist, wobei in einem dritten Verfahrensschritt, in Abhängigkeit der Netzidentifikationsinformation, durch das Telekommunikationsnetzwerk ein dediziertes Routing des Datenpakets innerhalb des Zielnetzes durchgeführt wird.

Es ist hierdurch gemäß der vorliegenden Erfindung in vorteilhafter Weise möglich, dass durch das dedizierte Routing die Datenpakete derart über das Telekommunikationsnetzwerk transportiert werden, dass eine vergleichsweise hohe Datensicherheit gewährleistet wird. Beispielsweise ist es vorteilhaft möglich, eine sogenannte europäische Cloud und/oder ein rein nationales (IP-)Routing und/oder ein Routing im Netz des eigenen Internetdienstanbieters zu realisieren. Beispielsweise wird eine Anfrage von einer deutschen Quelle zum ".de-Domain" Ziel in Deutschland ggf. durch den Internetdienstanbieter vor Ort bzw. nur innerhalb Deutschlands geroutet. So ist es beispielsweise möglich, vertrauliche Daten an Behörden innerhalb des eigenen Landes zu über das Telekommunikationsnetzwerk zu transportieren, beispielsweise beim sogenannten "DE-Mail" E-Maildienst. Dies wird insbesondere dadurch erreicht, dass bevorzugt im Kopfdatenteil (d.h. insbesondere im IP-Header) des Datenpakets die Netzidentifikationsinformation als Routinginformation eingefügt wird, sodass in Abhängigkeit der Netzidentifikationsinformation beispielsweise für das Telekommunikationsnetzwerk (bzw. für mehrere Netzwerkknoten des Telekommunikationsnetzwerkes) eine Routingvorgabe bereitgestellt wird. Bevorzugt wird das Datenpaket ausschließlich innerhalb des Zielnetzes - beispielsweise des Dienstanbieternetzes, insbesondere des eigenen Internetdienstanbieters - dediziert geroutet (d.h. das Datenpaket wird während des dedizierten Routings nur an solche Netzwerkknoten des Telekommunikationsnetzwerkes weitergeleitet, die von dem Zielnetz umfasst sind), wenn durch die Netzidentifikationsinformation das Zielnetz identifizierbar ist. Bevorzugt wird das Datenpaket über eine beliebige bzw. weltweite Netzwerkroute (d.h. nicht dediziert bzw. auch außerhalb des eigenen Dienstanbieternetzes) geroutet, wenn durch die Netzidentifikationsinformation das gesamte Telekommunikationsnetz oder gar kein Rechnernetz identifizierbar ist. Der minimale Speicherbedarf der Netzidentifikationsinformation beträgt in diesem Fall beispielsweise wenigstens ein Bit - d.h. insbesondere, dass zwei mögliche Zustände bzw. Routingvorgaben (beispielsweise "dediziertes Routing im Zielnetz" und "kein dediziertes Routing" bzw. "weltweites Routing") durch das Telekommunikationsnetzwerk unterscheidbar sind. Erfindungsgemäß bevorzugt beträgt der maximale Speicherbedarf der Netzidentifikationsinformation 7 Bit oder mehr (beispielsweise bei einer 7 stelligen Zeichenkette mit Dezimalzahlen bzw. Hexadezimalzahlen). Erfindungsgemäß bevorzugt wird die Netzwerkidentifikationsinformation als - bezogen auf den Stand der Technik - zusätzlicher Datensatz bzw. zusätzliches Flag im Kopfdatenteil - insbesondere im IP-Header gemäß Internet Protokoll Version 4 (IPv4) oder Internet Protokoll Version 6 (IPv6) - des Datenpakets für das dedizierte Routing - beispielsweise innerhalb eines Staates oder Kontinents - eingefügt. Erfindungsgemäß bevorzugt ist unter dem dedizierten Routing - insbesondere des Datenpakets innerhalb des Zielnetzes - ein Verfahren zur Optimierung des Internet Routings durch hierarchische Adressinformationen zu verstehen.

Erfindungsgemäß ist es ferner bevorzugt, dass durch das Hinzufügen von maximal 7 Bits bzw. einer siebenstelligen Zeichenkette im IP-Header des Datenpakets ein gezieltes Routing innerhalb eines Teilnetzes der mehreren Teilnetze des Telekommunikationsnetzwerkes ermöglicht wird. Bevorzugt ist ein solches Routing bei Internet Protokoll Version 4 und/oder bei Internet Protokoll Version 6 und/oder bei weiteren Internet-Protokoll Versionen realisierbar. Wenn die Netzidentifikationsinformation in Form einer maximal siebenstelligen Zeichenkette verwendet wird, wird die Netzidentifikationsinformation als dezimaler Wert - insbesondere bei einem Datenpaket mit IPv4 als Protokollversion - bzw. als hexadezimaler Wert - insbesondere bei einem Datenpaket mit IPv6 als Protokollversion - in den IP-Header eingefügt.

Erfindungsgemäß ist es bevorzugt, dass in dem ersten Verfahrensschritt das Datenpaket an einen Netzwerkknoten eines mit dem Sendegerät assoziierten Teilnetzes der mehreren Teilnetze übermittelt wird, wobei in dem zweiten Verfahrensschritt die Netzidentifikationsinformation durch den Netzwerkknoten festgelegt wird, wobei der Netzwerkknoten insbesondere ein Router, bevorzugt ein Internet-Gateway-Router, eines mit dem Sendegerät assoziierten Dienstanbieters ist.

Hierdurch ist es erfindungsgemäß in vorteilhafter Weise möglich, dass durch die Festlegung der Netzidentifikationsinformation durch den Netzwerkknoten des mit dem Sendegerät assoziierten Teilnetzes das dedizierte Routing des Datenpakets entlang der gesamten Netzwerkroute durch das Telekommunikationsnetzwerk - d.h. vom Sendgerät bis zum Empfangsgerät - durchgeführt wird, wenn es sich bei dem Zielnetz und dem Teilnetz um dasselbe Teilnetz des Telekommunikationsnetzes handelt oder wenn das Teilnetz von dem Zielnetz mitumfasst wird.

Erfindungsgemäß ist es ferner bevorzugt vorgesehen, dass das Datenpaket einen Kopfdatenteil und einen Nutzdatenteil umfasst, wobei der Kopfdatenteil eine Zieladressinformation zur Adressierung des Empfangsgeräts innerhalb des Telekommunikationsnetzwerkes aufweist, wobei in dem zweiten Verfahrensschritt durch den Netzwerkknoten das Zielnetz in Abhängigkeit der Zieladressinformation ermittelt wird, wobei durch den Netzwerkknoten in Abhängigkeit des ermittelten Zielnetzes die Netzidentifikationsinformation erzeugt wird, wobei durch den Netzwerkknoten die Netzidentifikationsinformation in den Kopfdatenteil des Datenpakets eingefügt wird.

Hierdurch ist es erfindungsgemäß in vorteilhafter Weise möglich, dass durch Einfügen bzw. Hinzufügen der Netzidentifikationsinformation in den Kopfdatenteil des Datenpakets das dedizierte Routing in besonders effizienter Weise realisiert wird. Weiterhin wird durch die Ermittlung des Zielnetzes in Abhängigkeit der Netzidentifikationsinformation vom Sendegerät bis zum Empfangsgerät das dedizierte Routing durchgeführt. Alternativ wird das Datenpaket zunächst an das Zielnetz übermittelt und anschließend nur innerhalb des Zielnetzes bis zum Endgerät weitergeleitet.

Erfindungsgemäß ist es ferner bevorzugt vorgesehen, dass in dem dritten Verfahrensschritt, in Abhängigkeit der Netzidentifikationsinformation, während der Durchführung des dedizierten Routings das Datenpaket ausschließlich innerhalb des Zielnetzes bis zum Empfangsgerät weitergeleitet wird, wobei insbesondere das Zielnetz das mit dem Sendegerät assoziierte Teilnetz der mehreren Teilnetze ist.

Hierdurch ist es erfindungsgemäß in vorteilhafter Weise möglich, dass beispielsweise ein auf einen Kontinent begrenztes Routing oder ein nationales Routing oder ein dienstanbieterspezifisches Routing des Datenpakets vom Sendegerät bis zum Empfangsgerät realisiert wird, wenn das Zielnetz und das mit dem Sendegerät assoziierte Teilnetz ein Kontinentalnetz, Staatsnetz bzw. Dienstanbieternetz sind.

Erfindungsgemäß ist es ferner bevorzugt vorgesehen, dass das Telekommunikationsnetzwerk ein weltweites Internetprotokoll (IP-)Telekommunikationsnetzwerk ist, wobei das Datenpaket ein IP-Datenpaket ist, wobei in dem dritten Verfahrensschritt das Datenpaket
-- über das Telekommunikationsnetzwerk bis zum Empfangsgerät weitergeleitet wird, wenn in Abhängigkeit der Netzidentifikationsinformation, das weltweite IP-Telekommunikationsnetzwerk als das Zielnetz durch das Telekommunikationsnetzwerk identifiziert wird,
-- innerhalb eines Kontinentalnetzes der mehreren Teilnetze bis zum Empfangsgerät weitergeleitet wird, wenn, in Abhängigkeit der Netzidentifikationsinformation, das Kontinentalnetz als das Zielnetz durch das Telekommunikationsnetzwerk identifiziert wird,
-- innerhalb eines Staatsnetzes der mehreren Teilnetze bis zum Empfangsgerät weitergeleitet wird, wenn, in Abhängigkeit der Netzidentifikationsinformation, das Staatsnetz als das Zielnetz durch das Telekommunikationsnetzwerk identifiziert wird, und/oder
-- innerhalb eines Dienstanbieternetzes der mehreren Teilnetze bis zum Empfangsgerät weitergeleitet wird, wenn, in Abhängigkeit der Netzidentifikationsinformation, das Dienstanbieternetz als das Zielnetz durch das Telekommunikationsnetzwerk identifiziert wird.

Hierdurch ist es erfindungsgemäß in vorteilhafter Weise möglich, dass ein gezieltes IP-Routing innerhalb eines dedizierten Teilnetzes der mehreren Teilnetzes des Telekommunikationsnetzwerkes realisiert wird, wobei das dedizierte Teilnetz beispielsweise das Kontinentalnetz, das Staatsnetz (oder Nationalnetz bzw. länderspezifisches Teilnetz) oder das Dienstanbieternetz ist.

Erfindungsgemäß ist es ferner bevorzugt vorgesehen, dass eine maximal siebenstellige Zeichenkette als Netzidentifikationsinformation verwendet wird, wobei die maximal siebenstellige Zeichenkette insbesondere eine Dezimalzahlenkette oder Hexadezimalzahlenkette ist.

Hierdurch ist es erfindungsgemäß in vorteilhafter Weise möglich, dass eine IP-Routinglösung bereitgestellt wird, die dediziert und schnell ist, wobei in diesem Kontext eine schnelle IP-Routinglösung bedeutet, dass im Vergleich zu einem Routing gemäß dem Stand der Technik im Wesentlichen keine oder kaum messbare Verzögerung während der Weiterleitung des Datenpakets zwischen einzelnen Netzwerkknoten auftritt.

Erfindungsgemäß ist es ferner bevorzugt vorgesehen, dass das Telekommunikationsnetzwerk mehrere Netzwerkknoten zur Weiterleitung des Datenpakets vom Sendegerät an das Empfangsgerät aufweist, wobei in dem dritten Verfahrensschritt das Datenpaket von dem Netzwerkknoten an einen weiteren Netzwerkknoten der mehreren Netzwerkknoten weitergeleitet wird, wobei durch eine Logik des weiteren Netzwerkknotens das Zielnetz in Abhängigkeit der Netzidentifikationsinformation ermittelt wird, wobei in Abhängigkeit des ermittelten Zielnetzes das Datenpaket innerhalb des Zielnetzes bis zum Endgerät weitergeleitet wird.

Hierdurch ist es erfindungsgemäß in vorteilhafter Weise möglich, dass die Netzwerkknoten des Telekommunikationsnetzwerkes derart konfiguriert werden, dass das dedizierte Routing realisiert wird, wobei das Datenpaket im Vergleich zum Stand der Technik dennoch das Empfangsgerät im Wesentlichen ohne zusätzliche Verzögerung erreicht. Erfindungsgemäß bevorzugt ist die Logik (Routing-Logik) derart konfiguriert, dass das dedizierte Routing (des Datenpakets innerhalb des Zielnetzes) durchgeführt wird, wobei unter dem dedizierten Routing ein Verfahren zur Optimierung des Internet Routings durch hierarchische Adressinformationen zu verstehen ist.

Erfindungsgemäß ist es ferner bevorzugt vorgesehen, dass der Kopfdatenteil einen Datensatz zur Speicherung der Netzidentifikationsinformation umfasst, wobei der Datensatz ein einstelliges erstes Feldelement, ein einstelliges zweites Feldelement, ein zweistelliges drittes Feldelement und ein dreistelliges viertes Feldelement umfasst, wobei in dem dritten Verfahrensschritt durch die Logik des weiteren Netzwerkknotens das Zielnetz durch sequentielle Überprüfung des ersten, zweiten, dritten und/oder vierten Feldelementes des Datenfeldes ermittelt wird. Erfindungsgemäß ist es ferner bevorzugt vorgesehen, dass die sequentielle Überprüfung durch die Logik abgebrochen wird, wenn das Zielnetz durch die Logik eindeutig identifiziert worden ist.

Hierdurch ist es erfindungsgemäß in vorteilhafter Weise möglich, dass durch die sequentielle Überprüfung der vier Feldelemente des mit der Netzidentifikationsinformation assoziierten Datenfeldes ein besonders zeiteffizientes dediziertes IP-Routing realisiert wird.

Ein weiterer Gegenstand der vorliegenden Erfindung ist ein Telekommunikationsnetzwerk für die Optimierung des Routings eines Datenpakets in dem Telekommunikationsnetzwerk, wobei das Telekommunikationsnetzwerk mehrere Teilnetze umfasst, wobei das Telekommunikationsnetzwerk mehrere Netzwerkknoten zur Weiterleitung eines Datenpakets von einem mit dem Telekommunikationsnetzwerk verbundenen Sendegerät an ein mit dem Telekommunikationsnetzwerk verbundenes Empfangsgerät umfasst, wobei das Telekommunikationsnetzwerk derart konfiguriert ist, dass dem Datenpaket eine Netzidentifikationsinformation zur Identifikation eines Zielnetzes hinzugefügt wird, wenn das Datenpaket von dem Sendegerät an das Telekommunikationsnetzwerk übertragen wird, wobei das Zielnetz ein mit dem Empfangsgerät assoziiertes Teilnetz der mehreren Teilnetze des Telekommunikationsnetzwerkes ist, wobei das Telekommunikationsnetzwerk derart konfiguriert ist, dass ein dediziertes Routing des Datenpakets innerhalb des Zielnetzes in Abhängigkeit der Netzidentifikationsinformation durchführbar ist.

Es ist dadurch gemäß der vorliegenden Erfindung in vorteilhafter Weise möglich, dass das Telekommunikationsnetzwerk derart konfiguriert ist, dass durch das dedizierte Routing die Datenpakete so über das Telekommunikationsnetzwerk transportiert werden, dass eine vergleichsweise hohe Datensicherheit gewährleistet wird. Beispielsweise ist es vorteilhaft möglich, eine sogenannte europäische Cloud und/oder ein rein nationales IP-Routing und/oder ein Routing im Netz des eigenen Internetdienstanbieters zu realisieren. Dies wird insbesondere dadurch erreicht, dass die bevorzugt im Kopfdatenteil (d.h. insbesondere im IP-Header) des Datenpakets als Routinginformation eingefügte Netzidentifikationsinformation durch die mehreren Netzwerkknoten derart interpretierbar ist, dass in Abhängigkeit der Netzidentifikationsinformation beispielsweise für das Telekommunikationsnetzwerk eine Routingvorgabe bereitgestellt wird.

Erfindungsgemäß ist es - insbesondere im Hinblick auf das Telekommunikationsnetzwerk - bevorzugt vorgesehen, dass das Telekommunikationsnetzwerk derart konfiguriert ist, dass durch die mehreren Netzwerkknoten des Telekommunikationsnetzwerkes eine Routingvorgabe zur Durchführung des dedizierten Routings aus der Netzidentifikationsinformation ableitbar ist.

Hierdurch ist es erfindungsgemäß in vorteilhafter Weise möglich, dass aufgrund der Konfiguration der mehreren Netzwerkknoten die Netzidentifikationsinformation durch den jeweils an der Weiterleitung des Datenpakets beteiligten Netzwerkknotens ausgewertet wird, sodass das dedizierte Routing - d.h. insbesondere die Weiterleitung des Datenpakets nur an Netzwerkknoten des Zielnetzes - realisiert wird.

Erfindungsgemäß ist es - insbesondere im Hinblick auf das Telekommunikationsnetzwerk - bevorzugt vorgesehen, dass das Telekommunikationsnetzwerk ein weltweites Internetprotokoll (IP-)Telekommunikationsnetzwerk ist, wobei die mehreren Teilnetze ein auf einen Kontinent bezogenes Kontinentalnetz, ein auf ein Staatsgebiet bezogenes Staatsnetz und/oder ein auf einen Internetdienstanbieter eines Staates bezogenes Dienstanbieternetz umfassen, wobei die mehreren Netzwerkknoten derart konfiguriert sind, dass das Datenpaket während des dedizierten Routings bis zum Empfangsgerät
-- ausschließlich über Netzwerkknoten des Dienstanbieternetzes weiteregeleitet wird, wenn sich die Netzidentifikationsinformation auf das Dienstanbieternetz bezieht,
-- ausschließlich über Netzwerkknoten des Staatsnetzes weiteregeleitet wird, wenn sich die Netzidentifikationsinformation auf das Staatsnetz bezieht, und/oder
-- ausschließlich über Netzwerkknoten des Kontinentalnetzes weiteregeleitet wird, wenn sich die Netzidentifikationsinformation auf das Kontinentalnetz bezieht.

Hierdurch ist es erfindungsgemäß in vorteilhafter Weise möglich, innerhalb eines dedizierten Teilnetzes des Telekommunikationsnetzwerkes dediziert geroutet wird, wobei beispielsweise das Kontinentalnetz, das Staatsnetz (oder Nationalnetz bzw. länderspezifisches Teilnetz) oder das Dienstanbieternetz das dedizierte Teilnetz ist.

Erfindungsgemäß ist es - insbesondere im Hinblick auf das Telekommunikationsnetzwerk - bevorzugt vorgesehen, dass die mehreren Netzwerkknoten jeweils eine Logik zur Ermittlung des Zielnetzes in Abhängigkeit der Netzidentifikationsinformation aufweisen, wobei die mehreren Netzwerkknoten derart konfiguriert sind, dass, in Abhängigkeit der Netzidentifikationsinformation, durch die mehreren Netzwerkknoten das Datenpaket während des dedizierten Routings ausschließlich innerhalb des Zielnetzes bis zum Empfangsgerät weitergeleitet wird.

Hierdurch ist es erfindungsgemäß in vorteilhafter Weise möglich, dass das Datenpaket dediziert geroutet wird und im Vergleich zum Stand der Technik dennoch das Empfangsgerät im Wesentlichen ohne zusätzliche Verzögerung erreicht.

Ferner bezieht sich die vorliegende Erfindung auch auf ein Computerprogramm mit Programmcodemitteln, mit deren Hilfe alle Schritte eines erfindungsgemäßen Verfahrens durchführbar sind, wenn das Computerprogramm auf einer programmierbaren Einrichtung und/oder auf einem Netzwerkknoten, insbesondere in Teilen auf mehreren Netzwerkknoten eines Telekommunikationsnetzwerkes, ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte eines erfindungsgemäßen Verfahrens durchführbar sind, wenn das Computerprogramm auf einer programmierbaren Einrichtung und/oder auf einem Netzwerkknoten, insbesondere in Teilen auf mehreren Netzwerkknoten eines Telekommunikationsnetzwerkes, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figuren 1 und 2**: zeigen schematische Ansichten eines erfindungsgemäßen Telekommunikationsnetzwerkes,
- **Figuren 3 bis 9**: zeigen schematische Ansichten eines Datenfeldes zur Speicherung einer erfindungsgemäßen Netzidentifikationsinformation.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

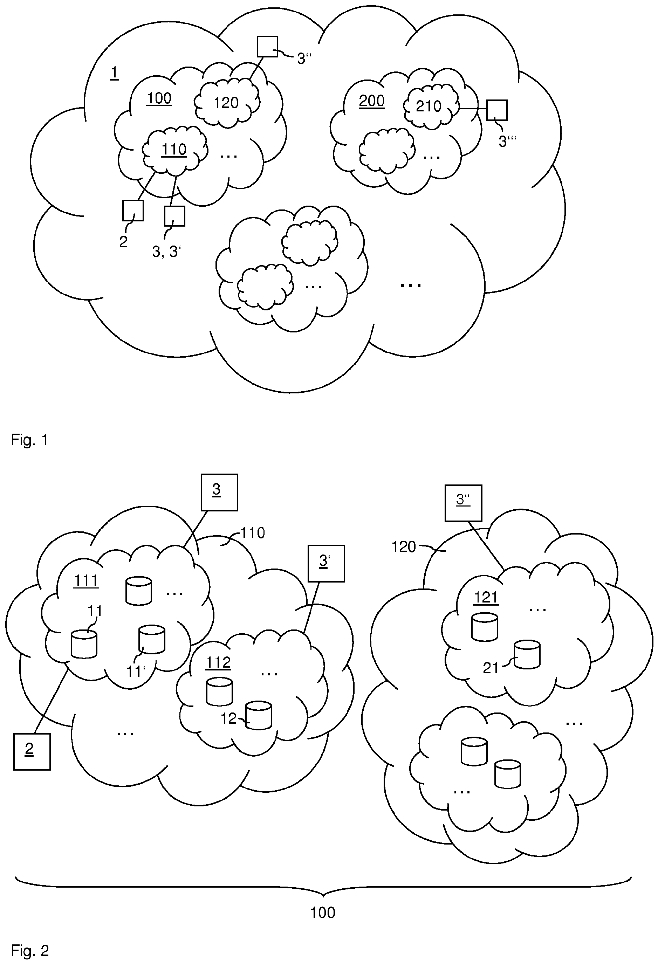

In Figur 1 ist schematisch eine Ansicht eines erfindungsgemäßen Telekommunikationsnetzwerkes 1 dargestellt. Das hier dargestellte Telekommunikationsnetzwerk 1 ist insbesondere ein Paketvermittlungsnetzwerk, bevorzugt ein IP-Telekommunikationsnetzwerk 1, beispielsweise das Internet. Weiterhin dargestellt ist ein mit dem Telekommunikationsnetzwerk 1 (über eine IP-Kommunikationsverbindung) verbundenes Sendegerät 2 und ein mit dem Telekommunikationsnetzwerk 1 (über eine weitere IP-Kommunikationsverbindung) verbundenes Empfangsgerät 3, 3', 3", 3"'. Das Telekommunikationsnetzwerk 1 ist derart konfiguriert, dass ein Datenpaket von dem Sendegerät 2 über eine Netzwerkroute bis zum Empfangsgerät 3, 3', 3", 3'" geroutet (d.h. weitergeleitet bzw. transportiert) wird, wenn das Datenpaket von dem Sendegerät 2 an das Telekommunikationsnetzwerk (über die Kommunikationsverbindung) übermittelt wird.

Das Telekommunikationsnetzwerk 1 umfasst mehrere Teilnetze 100, 110, 120, 200, 210 (von denen hier nur einige dargestellte sind). Das Telekommunikationsnetzwerk 1 ist hierarchisch in die mehreren Teilnetze 100, 110, 120, 200, 210 (geographisch) untergegliedert. Das bedeutet bevorzugt, dass das Telekommunikationsnetzwerk 1 ein übergeordnetes (d.h. weltweites) Rechnernetz ist, welches mehrere untergeordnete erste Teilnetze 100, 200 (d.h. auf einen Kontinent bezogene erste Teilnetze 100, 200 bzw. Kontinentalnetze 100, 200) vollständig umfasst. Jedes erste Teilnetz 100, 200 (bzw. Kontinentalnetz 100, 200) umfasst wiederum mehrere untergeordnete zweite Teilnetze 110, 120 bzw. 210 (d.h. auf ein Staatsgebiet/ein Land bezogene zweite Teilnetze 110, 120, 210 bzw. Staatsnetze 110, 120, 210).

In Figur 2 ist schematisch eine Ansicht eines erfindungsgemäßen Telekommunikationsnetzwerkes 1 dargestellt, wobei die hier dargestellte Ausführungsform im Wesentlichen identisch zu der in Figur 1 dargestellten Ausführungsform ist. Hier ist ein in Figur 1 gezeigtes erstes Teilnetz 100 (beispielsweise das Kontinentalnetz 100 des afrikanischen Kontinents) mit einem zweiten Teilnetz 110 (beispielsweise der Staat Namibia des afrikanischen Kontinents) und ein weiteres zweites Teilnetz 120 (eines weiteren Staates des afrikanischen Kontinents) detaillierter dargestellt. Jedes zweite Teilnetz 110, 120, 210 (bzw. Staatsnetz) umfasst wiederum mehrere untergeordnete dritte Teilnetze 111, 112 bzw. 121 (d.h. auf einen Dienstanbieter bezogene dritte Teilnetze bzw. Dienstanbieternetz 111, 112, 121).

Das Telekommunikationsnetzwerk 1 ist derart konfiguriert ist, dass dem Datenpaket eine Netzidentifikationsinformation zur Identifikation eines Zielnetzes hinzugefügt wird, wenn das Datenpaket von dem Sendegerät 2 an das Telekommunikationsnetzwerk 1 übertragen wird. Das Zielnetz ist dabei ein mit dem Empfangsgerät 3, 3', 3", 3'" assoziiertes Teilnetz der mehreren Teilnetze 100, 110, 111, 112, 120, 121, 200, 210 des Telekommunikationsnetzwerkes 1. Beispielsweise ist das Zielnetz ein mit dem Sendegerät 2 assoziiertes Dienstanbieternetz 111 innerhalb des Staatsnetzes 110, wenn das Sendegerät und Empfangsgerät 3 über dasselbe Dienstanbieternetz 111 des Staatsnetzes 110 mit dem Telekommunikationsnetzwerk 1 verbunden sind. Beispielsweise ist das Zielnetz das Staatsnetz 110, wenn das Sendegerät und das Empfangsgerät 3' über unterschiedliche Dienstanbieternetze 111, 112 mit dem Telekommunikationsnetzwerk 1 verbunden sind. Beispielsweise ist das Zielnetz das Kontinentalnetz 100, wenn das Sendegerät 2 und das Empfangsgerät 3" über unterschiedliche Staatsnetze 110, 120 mit dem Telekommunikationsnetzwerk 1 verbunden sind. Beispielsweise ist das Zielnetz das (weltweite) Telekommunikationsnetzwerk 1, wenn das Sendegerät 2 und das Empfangsgerät 3'" über unterschiedliche Kontinentalnetze 100, 200 mit dem Telekommunikationsnetzwerk 1 verbunden sind (siehe Figur 1). Erfindungsgemäß bevorzugt ist das Telekommunikationsnetzwerk 1 ist derart konfiguriert, dass ein dediziertes Routing des Datenpakets innerhalb des Zielnetzes in Abhängigkeit der Netzidentifikationsinformation durchgeführt wird.

Bevorzugt umfasst das Telekommunikationsnetzwerk 1 mehrere Netzwerkknoten 11, 11', 12, 21 zur Weiterleitung des Datenpakets vom Sendgerät 2 zum Empfangsgerät 3, 3', 3", 3"', wobei bevorzugt jeder Netzwerkknoten 11, 11', 12, 21 jeweils (genau) einem Dienstanbieternetz 111 bzw. 112, (genau) einem Staatsnetz 110 bzw. 120 und/oder (genau) einem Kontinentalnetz 100 zugeordnet ist.

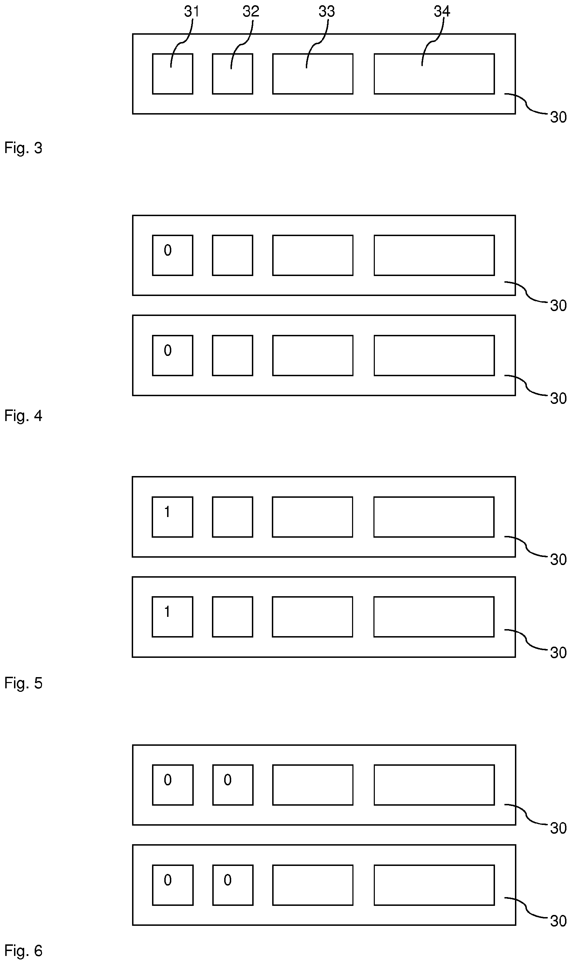

In Figur 3 ist schematisch eine Ansicht eines Datenfeldes 30 zur Speicherung einer erfindungsgemäßen Netzidentifikationsinformation dargestellt, wobei beispielsweise das Datenpaket einen Kopfdatenteil mit dem Datenfeld 30 zur Speicherung der Netzidentifikationsinformation aufweist. Das Datenfeld 30 umfasst bevorzugt ein einstelliges erstes Feldelement 31, ein einstelliges zweites Feldelement 32, ein zweistelliges drittes Feldelement 33 und ein dreistelliges viertes Feldelement 34. Durch eine Logik eines Netzwerkknotens der mehreren Netzwerkknoten 11, 11', 12, 21 wird das Zielnetz durch sequentielle Überprüfung des ersten, zweiten, dritten und/oder vierten Feldelementes 31, 32, 33, 34 des Datenfeldes 30 ermittelt, wobei insbesondere die sequentielle Überprüfung durch die Logik abgebrochen wird, wenn das Zielnetz durch die Logik eindeutig identifiziert worden ist. Erfindungsgemäß bevorzugt wird in eine zu routende Nachricht (d.h. in ein Datenpaket, welches vom Sendegerät 2 an das Telekommunikationsnetzwerk 1 übermittelt wird) eine Kennung (d.h. eine Netzidentifikationsinformation) eingefügt, wobei sich die Kennung beispielsweise auf das Zielnetz einer Zielnation bezieht. Da die zu routende Nachricht (bzw. das Datenpaket) sowohl als IPv4- wie auch IPv6-Nachrichten geroutet werden können, sind sowohl Dezimalzahlen (für IPv4) und/oder Hexadezimalen (für IPv6) zur Realisierung der Kennungen vorgesehen. Hierbei setzt sich die Netzidentifikationsinformation insbesondere aus Einträgen in das erste bis vierte Feldelement 31, 32, 33, 34 des Datenfeldes 30 zusammen.

Bevorzugt umfasst das Datenfeld 30 an einer ersten Stelle/Position das erste Feldelement 31, wobei durch einen ersten Eintrag in das erste Feldelement 31 ein Routing (nur) innerhalb des mit dem Sendegerät 2 assoziierten Dienstanbieternetzes 111 (internes Routing) oder ein auswärtsgerichtetes (bzw. externes) Routing festgelegt wird. Das mit dem Sendegerät 2 assoziierte Dienstanbieternetz 111 wird hier auch als das eigene Dienstanbieternetz 111 bezeichnet. Bei einem Routing im eigenen Dienstanbieternetz 111 werden nachfolgende Feldelemente 32, 33, 34 des Datenfeldes 30 von dem Netzwerkknoten 11 und weiteren Netzwerkknoten 11' (beispielsweise Gateway/Router) des Dienstanbieternetzes 111 nicht mehr geprüft, sodass das (dedizierte) IP-Routing nur innerhalb des eigenen Dienstanbieternetzes 111 erfolgt. Für den alternativen Fall, dass durch die Netzidentifikationsinformation im ersten Feldelement 31 ein externes Routing festgelegt ist (beispielsweise durch eine Null), wird das zweite Feldelement 32 des Datenfeldes 30 ausgewertet.

Bevorzugt umfasst das Datenfeld 30 an einer zweiten Stelle/Position das einstellige zweite Feldelement 32, wobei durch einen zweiten Eintrag in das zweite Feldelement 32 ein Routing des Datenpakets innerhalb eines Kontinentalnetzes 100, 200 bzw. nur innerhalb eines Kontinents festgelegt wird. Wenn beispielsweise der zweite Eintrag des zweiten Feldelements 32 an dieser Stelle den Wert Null hat, dann wird das Datenpaket insbesondere über das gesamte Telekommunikationsnetz 1 (bevorzugt das World Wide Web) bis zum Empfangsgerät 3, 3', 3", 3''' weitergeleitet, wobei das nachfolgende dritte Feldelement 33 und vierte Feldelement 34 während der Übermittlung des Datenpakets nicht ausgewertet werden. Ist der zweite Eintrag des zweiten Feldelementes 32 ungleich bzw. größer als Null, dann erfolgt das Routing des Datenpakets beispielsweise nur innerhalb des mit dem durch den zweiten Eintrag spezifizierten Kontinentalnetzes 100. An zweiter Stelle wird so beispielsweise das Kontinentalnetz 100 bzw. der Kontinent festgelegt, über den das Datenpaket (ausschließlich) weitergeleitet wird. Innerhalb eines Kontinents werden die jeweiligen Länder (insbesondere durchlaufend) nummeriert. Zusätzlich ist optional eine Provider- bzw. Gruppenkennung vorgesehen. Nachfolgend sind beispielhafte Kennungen für eine Routingvorgabe für ein Routing innerhalb eines Kontinentalnetzes 100, 200 dargestellt:

| Kontinent | Dezimalkennung | Hexadezimalkennung |
|---|---|---|
| Alle Kontinente | 0 | 0 |
| Afrika | 1 | 1 |
| Nordamerika | 2 | 2 |
| Südamerika | 3 | 3 |
| Antarktis | 4 | 4 |
| Asien | 5 | 5 |
| Europa | 6 | 6 |
| Ozeanien/Australien | 7 | 7 |

Bevorzugt umfasst das Datenfeld 30 an einer dritten Stelle/Position das dritte Feldelement 33, wobei durch einen zweistelligen dritten Eintrag in das dritte Feldelement 33 ein Staatsnetze 111, 112, 121 eines Staates (bzw. eines Landes oder einer Region) festgelegt wird. Beispielsweise sind in das dritte Feldelement 33 ein dritter Eintrag von maximal 100 (00 - 99) möglichen unterschiedlichen dritten Einträgen (als IP-Routingvorgaben) eintragbar, wenn eine Dezimalzahl in das dritte Feldelement 33 eingetragen wird oder ein dritter Eintrag von bis zu 255 (00 - FF) unterschiedlichen dritte Einträgen (als IP-Routingvorgaben) eintragbar, wenn eine Hexadezimalzahl in das dritte Feldelement 33 eingetragen wird. Beispielsweise wird durch einen Eintrag eines Null-Wertes in dem dritten Feldelement 33 ein dediziertes IP-Routing zu Zielen im eigenen Kontinent vorgeben. Beispielsweise ist als dritter Eintrag in das dritte Feldelement 33 für den Kontinent Afrika, sofern dieser 53 Nationen umfasst, folgende Einträge (als Dezimalkennung oder Hexadezimalkennung) möglich:

| Land/Nation | Dezimalkennung | Hexadezimalkennung |
|---|---|---|
| IP-Routing im eigenen Kontinent | 00 | 00 |
| Algerien | 01 | 01 |
| Angola | 02 | 02 |
| Benin | 03 | 03 |
| Botswana | 04 | 04 |
| Burkina Faso | 05 | 05 |
| Burundi | 06 | 06 |
| Kamerun | 07 | 07 |
| Kap Verde | 08 | 08 |
| Zentralafrikanische Republik | 09 | 09 |
| Tschad | 10 | 0A |
| Komoren | 11 | 0B |
| Demokratische Republik Kongo | 12 | 0C |
| Dschibuti | 13 | 0D |
| Ägypten | 14 | 0E |
| Äthiopien | 15 | 0F |
| Äquatorialguinea | 16 | 10 |
| Eritrea | 17 | 11 |
| Gabun | 18 | 12 |
| Gambia | 19 | 13 |
| Ghana | 20 | 14 |
| Guinea | 21 | 15 |
| Guinea-Bissau | 22 | 16 |
| Elfenbeinküste | 23 | 17 |
| Kenia | 24 | 18 |
| Lesotho | 25 | 19 |
| Liberia | 26 | 1A |
| Libyen | 27 | 1B |
| Madagaskar | 28 | 1C |
| Malawi | 29 | 1D |
| Mali | 30 | 1E |
| Marokko | 31 | 1F |
| Mauretanien | 32 | 20 |
| Mauritius | 33 | 21 |
| Mosambik | 34 | 22 |
| Namibia | 35 | 23 |
| Niger | 36 | 24 |
| Nigeria | 37 | 25 |
| Republik Kongo | 38 | 26 |
| Ruanda | 39 | 27 |
| Sambia | 40 | 28 |
| Säo Tome und Príncipe | 41 | 29 |
| Senegal | 42 | 2A |
| Seychellen | 43 | 2B |
| Sierra Leone | 44 | 2C |
| Simbabwe | 45 | 2D |
| Somalia | 46 | 2E |
| Südafrika | 47 | 2F |
| Sudan | 48 | 30 |
| Swasiland | 49 | 31 |
| Tansania | 50 | 32 |
| Togo | 51 | 33 |
| Tunesien | 52 | 34 |
| Uganda | 53 | 35 |

Bevorzugt umfasst das Datenfeld 30 an einer vierten Stelle/Position das vierte Feldelement 34, wobei durch einen dreistelligen vierten Eintrag in das vierte Feldelement 34 des Datenfeldes 30 ein Dienstanbieternetz 111, 112, 121 für das dedizierte Routing des Datenpakets festgelegt wird. Insbesondere ist als vierter Eintrag ein Eintrag aus maximal 999 (001 - 999) möglichen vierten Einträgen, bei Eintragung einer Dezimalzahl, und ein Eintrag aus bis zu 4094 (001 - FFF) möglichen vierten Einträgen, bei Eintragung einer Hexadezimalzahl, möglich. Insbesondere ist kein reiner Null-Wert als Eintrag in das vierte Feldelement 34 vorgesehen.

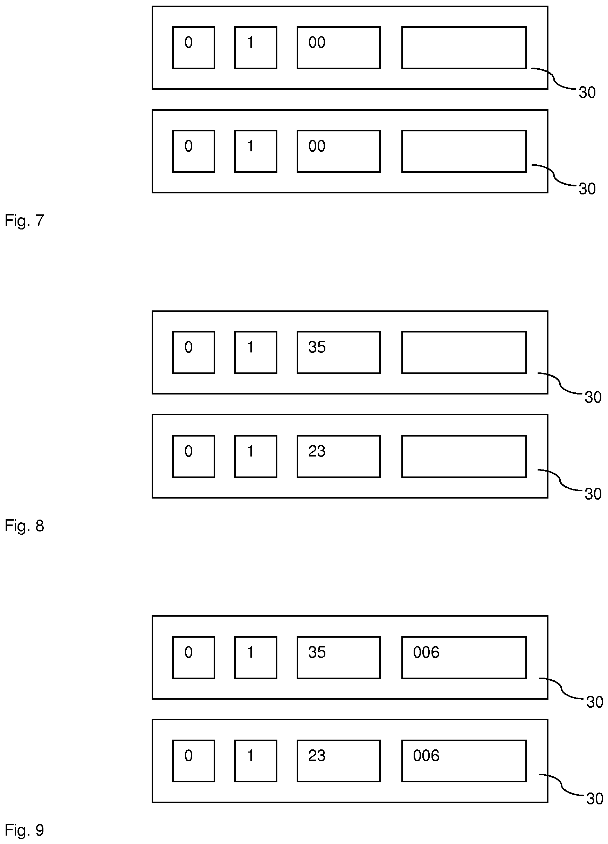

In Figuren 4 bis 9 sind verschiedene schematische Ansichten von Datensätzen 30 dargestellt. Figur 4 zeigt ein Beispiel einer Netzidentifikationsinformation in Dezimalzahldarstellung (Fig. 4, oben) - insbesondere für IPv4 Datenpakete - und Hexadezimalzahldarstellung (Fig. 4, unten) - insbesondere für IPv6 Datenpakete, wobei durch den hier dargestellten ersten Eintrag ein weltweites Routing des Datenpakets - d.h. ein auswärtsgerichtetes Routing aus dem mit dem Sendegerät 2 assoziierten Dienstanbieternetz 111 heraus - vorgegeben wird. Erfindungsgemäß bevorzugt werden die nachfolgenden zweiten bis vierten Einträge in dem zweiten bis vierten Feldelement 32, 33, 34 des Datenfeldes 30 während des dedizierten Routings überprüft, wenn mit dem ersten Eintrag in dem ersten Feldelement 31 ein externes Routing (aus dem Dienstanbieternetz 111 heraus) assoziiert ist. Figur 5 zeigt ein Beispiel einer Netzidentifikationsinformation für ein Routing nur im eigenen Dienstanbieternetz 111. Hier werden Einträge in dem nachfolgenden zweiten und/oder dritten und/oder vierten Feldelement 32, 33, 34 nicht geprüft, wenn der Eintrag des ersten Feldelements 31 eine Eins ist. Ein solcher Eintrag wird beispielsweise für das dedizierte Routing eines Datenpakets innerhalb einer sogenannten militarisierten Zone (MZ - militarized zone) im Ethernet/Internet verwendet. Figur 6 zeigt ein Beispiel für ein weltweites Routing. Figur 7 zeigt ein Beispiel für ein dediziertes Routing des Datenpakets innerhalb eines Kontinentalnetzes 100 (beispielsweise Afrika). Ein vierter Eintrag im vierten Feldelement 34 wird bei einem dedizierten Routing innerhalb eines Kontinentalnetzes 100 nicht überprüft. Figur 8 zeigt ein Beispiel für ein dediziertes Routing innerhalb eines Staatsnetzes 110, beispielsweise innerhalb eines Staatsnetzes 110 von Namibia. Figur 9 zeigt ein Beispiel für ein providerspezifisches Routing (d.h. ein dediziertes Routing innerhalb des Dienstanbieternetzes 111), beispielsweise innerhalb des sechsten Dienstanbieternetzes von Namibia.

## Patentansprüche

1. Verfahren zur Optimierung des Routings eines Datenpakets in einem Telekommunikationsnetzwerk (1), wobei ein Sendegerät (2) und ein Empfangsgerät (3, 3', 3", 3"') mit dem Telekommunikationsnetzwerk (1) verbunden sind, wobei das Telekommunikationsnetzwerk (1) mehrere Teilnetze (100, 110, 111, 112, 120, 121, 200, 210) umfasst, wobei in einem ersten Verfahrensschritt das Datenpaket von dem Sendegerät (2) an das Telekommunikationsnetzwerk (1) übermittelt wird, wobei in einem zweiten Verfahrensschritt dem Datenpaket eine Netzidentifikationsinformation zur Identifikation eines Zielnetzes durch das Telekommunikationsnetzwerk (1) hinzugefügt wird, wobei das Zielnetz ein mit dem Empfangsgerät (3, 3', 3", 3''') assoziiertes Teilnetz der mehreren Teilnetze (100, 110, 111, 112, 120, 121, 200, 210) des Telekommunikationsnetzwerkes (1) ist, wobei in einem dritten Verfahrensschritt, in Abhängigkeit der Netzidentifikationsinformation, durch das Telekommunikationsnetzwerk (1) ein dediziertes Routing des Datenpakets innerhalb des Zielnetzes durchgeführt wird,
wobei in dem dritten Verfahrensschritt, in Abhängigkeit der Netzidentifikationsinformation, während der Durchführung des dedizierten Routings das Datenpaket ausschließlich innerhalb des Zielnetzes bis zum Empfangsgerät (3, 3', 3", 3"') weitergeleitet wird, wobei insbesondere das Zielnetz ein mit dem Sendegerät (2) assoziierte Teilnetz (100, 110, 111) der mehreren Teilnetze (100, 110, 111, 112, 120, 121, 200, 210) ist.

2. Verfahren nach Anspruch 1, **dadurch gekennzeichnet, dass** in dem ersten Verfahrensschritt das Datenpaket an einen Netzwerkknoten (11) eines mit dem Sendegerät (2) assoziierten Teilnetzes (100, 110, 111) der mehreren Teilnetze (100, 110, 111, 112, 120, 121, 200, 210) übermittelt wird, wobei in dem zweiten Verfahrensschritt die Netzidentifikationsinformation durch den Netzwerkknoten (11) festgelegt wird, wobei der Netzwerkknoten (11) insbesondere ein Router, bevorzugt ein Internet-Gateway-Router, eines mit dem Sendegerät (2) assoziierten Dienstanbieters ist.

3. Verfahren nach einem der vorhergehenden Ansprüche, **dadurch gekennzeichnet, dass** das Datenpaket einen Kopfdatenteil und einen Nutzdatenteil umfasst, wobei der Kopfdatenteil eine Zieladressinformation zur Adressierung des Empfangsgeräts (3, 3', 3", 3"') innerhalb des Telekommunikationsnetzwerkes (1) aufweist, wobei in dem zweiten Verfahrensschritt durch den Netzwerkknoten (11) das Zielnetz in Abhängigkeit der Zieladressinformation ermittelt wird, wobei durch den Netzwerkknoten (11) in Abhängigkeit des ermittelten Zielnetzes die Netzidentifikationsinformation erzeugt wird, wobei durch den Netzwerkknoten (11) die Netzidentifikationsinformation in den Kopfdatenteil des Datenpakets eingefügt wird.

4. Verfahren nach einem der vorhergehenden Ansprüche, **dadurch gekennzeichnet, dass** das Telekommunikationsnetzwerk (1) ein weltweites Internetprotokoll (IP-)Telekommunikationsnetzwerk ist, wobei das Datenpaket ein IP-Datenpaket ist, wobei in dem dritten Verfahrensschritt das Datenpaket
-- über das Telekommunikationsnetzwerk (1) bis zum Empfangsgerät (3, 3', 3", 3"') weitergeleitet wird, wenn in Abhängigkeit der Netzidentifikationsinformation, das weltweite IP-Telekommunikationsnetzwerk (1) als das Zielnetz durch das Telekommunikationsnetzwerk (1) identifiziert wird,
-- innerhalb eines Kontinentalnetzes (100, 200) der mehreren Teilnetze (100, 110, 111, 112, 120, 121, 200, 210) bis zum Empfangsgerät (3, 3', 3", 3''') weitergeleitet wird, wenn, in Abhängigkeit der Netzidentifikationsinformation, das Kontinentalnetz (100, 200) als das Zielnetz durch das Telekommunikationsnetzwerk (1) identifiziert wird,
-- innerhalb eines Staatsnetzes (110, 120, 210) der mehreren Teilnetze (100, 110, 111, 112, 120, 121, 200, 210) bis zum Empfangsgerät (3, 3', 3", 3''') weitergeleitet wird, wenn, in Abhängigkeit der Netzidentifikationsinformation, das Staatsnetz (110, 120, 210) als das Zielnetz durch das Telekommunikationsnetzwerk (1) identifiziert wird, und/oder
-- innerhalb eines Dienstanbieternetzes (111, 112, 121) der mehreren Teilnetze (100, 110, 111, 112, 120, 121, 200, 210) bis zum Empfangsgerät (3, 3', 3", 3''') weitergeleitet wird, wenn, in Abhängigkeit der Netzidentifikationsinformation, das Dienstanbieternetz (111, 112, 121) als das Zielnetz durch das Telekommunikationsnetzwerk (1) identifiziert wird.

5. Verfahren nach einem der vorhergehenden Ansprüche, **dadurch gekennzeichnet, dass** eine maximal siebenstellige Zeichenkette als Netzidentifikationsinformation verwendet wird, wobei die maximal siebenstellige Zeichenkette insbesondere eine Dezimalzahlenkette oder Hexadezimalzahlenkette ist.

6. Verfahren nach einem der vorhergehenden Ansprüche, **dadurch gekennzeichnet, dass** das Telekommunikationsnetzwerk (1) mehrere Netzwerkknoten (11, 11', 12, 21) zur Weiterleitung des Datenpakets vom Sendegerät (2) an das Empfangsgerät (3, 3', 3", 3"') aufweist, wobei in dem dritten Verfahrensschritt das Datenpaket von dem Netzwerkknoten (11) an einen weiteren Netzwerkknoten (11', 12, 21) der mehreren Netzwerkknoten (11, 11', 12, 21) weitergeleitet wird, wobei durch eine Logik des weiteren Netzwerkknotens (11', 12, 21) das Zielnetz in Abhängigkeit der Netzidentifikationsinformation ermittelt wird, wobei in Abhängigkeit des ermittelten Zielnetzes das Datenpaket innerhalb des Zielnetzes bis zum Endgerät (3, 3', 3", 3'") weitergeleitet wird.

7. Verfahren nach Anspruch 6, **dadurch gekennzeichnet, dass** der Kopfdatenteil ein Datenfeld (30) zur Speicherung der Netzidentifikationsinformation umfasst, wobei das Datenfeld (30) ein einstelliges erstes Feldelement (31), ein einstelliges zweites Feldelement (32), ein zweistelliges drittes Feldelement (33) und ein dreistelliges viertes Feldelement (34) umfasst, wobei in dem dritten Verfahrensschritt durch die Logik des weiteren Netzwerkknotens (11', 12, 21) das Zielnetz durch sequentielle Überprüfung des ersten, zweiten, dritten und/oder vierten Feldelements (31, 32, 33, 34) des Datenfeldes (30) ermittelt wird.

8. Verfahren nach Anspruch 7, **dadurch gekennzeichnet, dass** die sequentielle Überprüfung durch die Logik abgebrochen wird, wenn das Zielnetz durch die Logik eindeutig identifiziert worden ist.

9. Telekommunikationsnetzwerk (1) für die Optimierung des Routings eines Datenpakets in dem Telekommunikationsnetzwerk (1), wobei das Telekommunikationsnetzwerk (1) mehrere Teilnetze (100, 110, 111, 112, 120, 121, 200, 210) umfasst, wobei das Telekommunikationsnetzwerk (1) mehrere Netzwerkknoten (11, 11', 12, 21) zur Weiterleitung eines Datenpakets von einem mit dem Telekommunikationsnetzwerk (1) verbundenen Sendegerät (2) an ein mit dem Telekommunikationsnetzwerk (1) verbundenes Empfangsgerät (3, 3', 3", 3'") umfasst, wobei das Telekommunikationsnetzwerk (1) derart konfiguriert ist, dass dem Datenpaket eine Netzidentifikationsinformation zur Identifikation eines Zielnetzes hinzugefügt wird, wenn das Datenpaket von dem Sendegerät (2) an das Telekommunikationsnetzwerk (1) übertragen wird, wobei das Zielnetz ein mit dem Empfangsgerät (3, 3', 3", 3'") assoziiertes Teilnetz der mehreren Teilnetze (100, 110, 111, 112, 120, 121, 200, 210) des Telekommunikationsnetzwerkes (1) ist, wobei das Telekommunikationsnetzwerk (1) derart konfiguriert ist, dass ein dediziertes Routing des Datenpakets innerhalb des Zielnetzes in Abhängigkeit der Netzidentifikationsinformation durchführbar ist,
wobei das Telekommunikationsnetzwerk (1) derart konfiguriert ist, dass, in Abhängigkeit der Netzidentifikationsinformation, während der Durchführung des dedizierten Routings das Datenpaket ausschließlich innerhalb des Zielnetzes bis zum Empfangsgerät (3, 3', 3", 3''') weitergeleitet wird, wobei insbesondere das Zielnetz das mit dem Sendegerät (2) assoziierte Teilnetz (100, 110, 111) der mehreren Teilnetze (100, 110, 111, 112, 120, 121, 200, 210) ist.

10. Telekommunikationsnetzwerk (1) nach Anspruch 9, **dadurch gekennzeichnet, dass** das Telekommunikationsnetzwerk (1) derart konfiguriert ist, dass durch die mehreren Netzwerkknoten (11, 11', 12, 21) des Telekommunikationsnetzwerkes (1) eine Routingvorgabe zur Durchführung des dedizierten Routings aus der Netzidentifikationsinformation ableitbar ist.

11. Telekommunikationsnetzwerk (1) nach einem Ansprüche 9 oder 10, **dadurch gekennzeichnet, dass** das Telekommunikationsnetzwerk (1) ein weltweites Internetprotokoll (IP-)Telekommunikationsnetzwerk (1) ist, wobei die mehreren Teilnetze (100, 110, 111, 112, 120, 121, 200, 210) ein auf einen Kontinent bezogenes Kontinentalnetz (100), ein auf ein Staatsgebiet bezogenes Staatsnetz (110) und/oder ein auf einen Internetdienstanbieter eines Staates bezogenes Dienstanbieternetz (111) umfassen, wobei die mehreren Netzwerkknoten (11, 11', 12, 21) derart konfiguriert sind, dass das Datenpaket während des dedizierten Routings bis zum Empfangsgerät (3, 3', 3", 3'")
-- ausschließlich über Netzwerkknoten (11, 11') des Dienstanbieternetzes (111) weiteregeleitet wird, wenn sich die Netzidentifikationsinformation auf das Dienstanbieternetz (111) bezieht,
-- ausschließlich über Netzwerkknoten (11, 11', 12) des Staatsnetzes (110) weiteregeleitet wird, wenn sich die Netzidentifikationsinformation auf das Staatsnetz (110) bezieht, und/oder
-- ausschließlich über Netzwerkknoten (11, 11', 12, 21) des Kontinentalnetzes (100) weiteregeleitet wird, wenn sich die Netzidentifikationsinformation auf das Kontinentalnetz (100) bezieht.

12. Telekommunikationsnetzwerk (1) nach Anspruch 9 bis 11, **dadurch gekennzeichnet, dass** die mehreren Netzwerkknoten (11, 11', 12, 21) jeweils eine Logik zur Ermittlung des Zielnetzes in Abhängigkeit der Netzidentifikationsinformation aufweisen, wobei die mehreren Netzwerkknoten (11, 11', 12, 21) derart konfiguriert sind, dass, in Abhängigkeit der Netzidentifikationsinformation, durch die mehreren Netzwerkknoten (11, 11', 12, 21) das Datenpaket während des dedizierten Routings ausschließlich innerhalb des Zielnetzes bis zum Empfangsgerät (3, 3', 3", 3"') weitergeleitet wird.

13. Computerprogramm mit Programmcodemitteln, mit deren Hilfe alle Schritte eines Verfahrens nach einem der Ansprüche 1 bis 8 durchführbar sind, wenn das Computerprogramm auf einer programmierbaren Einrichtung und/oder auf einem Netzwerkknoten (11, 11', 12, 21), insbesondere in Teilen auf mehreren Netzwerkknoten (11, 11', 12, 21) eines Telekommunikationsnetzwerkes (1), ausgeführt wird.

14. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 8 durchführbar sind, wenn das Computerprogramm auf einer programmierbaren Einrichtung und/oder auf einem Netzwerkknoten (11, 11', 12, 21), insbesondere in Teilen auf mehreren Netzwerkknoten (11, 11', 12, 21) eines Telekommunikationsnetzwerkes (1), ausgeführt wird.

## Claims

1. Method for optimising the routing of a data packet in a telecommunications network (1), wherein a transmitting device (2) and a receiving device (3, 3' 3", 3''') are connected to the telecommunications network (1), wherein the telecommunications network (1) comprises a plurality of subnetworks (100, 110, 111, 112, 120, 121, 200, 210), wherein in a first method step, the data packet is transmitted by the transmitting device (2) to the telecommunications network (1), wherein in a second method step, the data packet has added to it network identification information for identification of a target network by the telecommunications network (1), wherein the target network is a subnetwork of the plurality of subnetworks (100, 110, 111, 112, 120, 121, 200, 210) of the telecommunications network (1), which subnetwork is associated with the receiving device (3, 3' 3'', 3'''), wherein in a third method step, in dependence upon the network identification information, dedicated routing of the data packet within the target network is carried out by the telecommunications network (1),
wherein in the third method step, in dependence upon the network identification information, while the dedicated routing is being carried out, the data packet is forwarded exclusively within the target network to the receiving device (3, 3' 3'', 3'''), wherein in particular the target network is a subnetwork (100, 110, 111) of the plurality of subnetworks (100, 110, 111, 112, 120, 121, 200, 210), which subnetwork is associated with the transmitting device (2).

2. Method as claimed in claim 1, **characterised in that** in the first method step, the data packet is transmitted to a network node (11) of a subnetwork (100, 110, 111) of the plurality of subnetworks (100, 110, 111, 112, 120, 121, 200, 210), which subnetwork is associated with the transmitting device (2), wherein in the second method step, the network identification information is established by the network node (11), wherein the network node (11) is in particular a router, preferably an internet-gateway-router, of a service provider associated with the transmitting device (2).

3. Method as claimed in any one of the preceding claims, **characterised in that** the data packet comprises a header data part and a user data part, wherein the header data part comprises target address information for addressing of the receiving device (3, 3' 3'', 3''') within the telecommunications network (1), wherein in the second method step, by means of the network node (11) the target network is detected in dependence upon the target address information, wherein by means of the network node (11), in dependence on the detected target network, the network identification information is generated, wherein by means of the network node (11) the network identification information is inserted into the header data part of the data packet.

4. Method as claimed in any one of the preceding claims, **characterised in that** the telecommunications network (1) is a worldwide internet protocol (IP) telecommunications network, wherein the data packet is an IP data packet, wherein in the third method step, the data packet
- is forwarded via the telecommunications network (1) to the receiving device (3, 3' 3'', 3''') when, in dependence upon the network identification information, the worldwide IP telecommunications network (1) is identified as the target network by the telecommunications network (1),
- is forwarded within a continental network (100, 200) of the plurality of subnetworks (100, 110, 111, 112, 120, 121, 200, 210) to the receiving device (3, 3' 3", 3'''), when, in dependence upon the network identification information, the continental network (100, 200) is identified as the target network by the telecommunications network (1),
- is forwarded within a state network (110, 120, 210) of the plurality of subnetworks (100, 110, 111, 112, 120, 121, 200, 210) to the receiving device (3, 3' 3", 3''') when, in dependence upon the network identification information, the state network (110, 120, 210) is identified as the target network by the telecommunications network (1), and/or
- is forwarded within a service provider network (111, 112, 121) of the plurality of subnetworks (100, 110, 111, 112, 120, 121, 200, 210) to the receiving device (3, 3' 3'', 3''') when, in dependence upon the network identification information, the service provider network (111, 112, 121) is identified as the target network by the telecommunications network (1).

5. Method as claimed in any one of the preceding claims, **characterised in that** a maximum-length seven-digit string is used as the network identification information, wherein the maximum-length seven-digit string is in particular a decimal number string or a hexadecimal number string.

6. Method as claimed in any one of the preceding claims, **characterised in that** the telecommunications network (1) comprises a plurality of network nodes (11, 11', 12, 21) for forwarding the data packet from the transmitting device (2) to the receiving device (3, 3' 3", 3'''), wherein in the third method step, the data packet is forwarded from the network node (11) to a further network node (11', 12, 21) of the plurality of network nodes (11, 11', 12, 21), wherein by means of a logic of the further network node (11', 12, 21) the target network is detected in dependence upon the network identification information, wherein, in dependence upon the detected target network, das data packet is forwarded within the target network to the terminal (3, 3' 3", 3"').

7. Method as claimed in claim 6, **characterised in that** the header data part comprises a data field (30) for storing the network identification information, wherein the data field (30) comprises a single-digit first field element (31), a single-digit second field element (32), a two-digit third field element (33) and a three-digit fourth field element (34), wherein, in the third method step, by means of the logic of the further network node (11', 12, 21) the target network is detected by sequential checking of the first, second, third and/or fourth field elements (31, 32, 33, 34) of the data field (30).

8. Method as claimed in claim 7, **characterised in that** the sequential checking is interrupted by the logic when the target network has been clearly identified by the logic.

9. Telecommunications network (1) for optimising the routing of a data packet in the telecommunications network (1), wherein the telecommunications network (1) comprises a plurality of subnetworks (100, 110, 111, 112, 120, 121, 200, 210), wherein the telecommunications network (1) comprises a plurality of network nodes (11, 11', 12, 21) for forwarding a data packet from a transmitting device (2) connected to the telecommunications network (1) to a receiving device (3, 3' 3'', 3''') connected to the telecommunications network (1), wherein the telecommunications network (1) is configured in such a way that the data packet has added to it network identification information for identification of a target network when the data packet is transmitted by the transmitting device (2) to the telecommunications network (1), wherein the target network is a subnetwork of the plurality of subnetworks (100, 110, 111, 112, 120, 121, 200, 210) of the telecommunications network (1), which subnetwork is associated with the receiving device (3, 3' 3'', 3'''), wherein the telecommunications network (1) is configured in such a way that dedicated routing of the data packet can be carried out within the target network in dependence upon the network identification information,
wherein the telecommunications network (1) is configured in such a way that, in dependence upon the network identification information, while the dedicated routing is being carried out, the data packet is forwarded exclusively within the target network to the receiving device (3, 3' 3'', 3'''), wherein in particular the target network is the subnetwork (100, 110, 111) of the plurality of subnetworks (100, 110, 111, 112, 120, 121, 200, 210), which subnetwork is associated with the transmitting device (2).

10. Telecommunications network (1) as claimed in claim 9, **characterised in that** the telecommunications network (1) is configured in such a way that by means of the plurality of network nodes (11, 11', 12, 21) of the telecommunications network (1) a routing specification for carrying out the dedicated routing can be derived from the network identification information.

11. Telecommunications network (1) as claimed in claims 9 or 10, **characterised in that** the telecommunications network (1) is a worldwide internet protocol (IP-) telecommunications network (1), wherein the plurality of subnetworks (100, 110, 111, 112, 120, 121, 200, 210) comprise a continental network (100) related to a continent, a state network (110) related to a state territory and/or a service provider network (111) related to an internet service provider of a state, wherein the plurality of network nodes (11, 11', 12, 21) are configured in such a way that, during the dedicated routing, the data packet is forwarded to the receiving device (3, 3' 3", 3'''),
- exclusively via network nodes (11, 11') of the service provider network (111) when the network identification information relates to the service provider network (111),
- exclusively via network nodes (11, 11', 12) of the state network (110) when the network identification information relates to the state network (110) and/or
- exclusively via network nodes (11, 11', 12, 21) of the continental network (100) when the network identification information relates to the continental network (100).

12. Telecommunications network (1) as claimed in claims 9 to 11, **characterised in that** the plurality of network nodes (11, 11', 12, 21) each comprise a logic to detect the target network in dependence upon the network identification information, wherein the plurality of network nodes (11, 11', 12, 21) are configured in such a way that, in dependence upon the network identification information, by means of the plurality of network nodes (11, 11', 12, 21) the data packet is forwarded during the dedicated routing exclusively within the target network to the receiving device (3, 3' 3", 3''').

13. Computer program having program code means, with the aid of which all steps of a method as claimed in any one of claims 1 to 8 can be carried out when the computer program is executed on a programmable device and/or on a network node (11, 11', 12, 21), in particular in parts on a plurality of network nodes (11, 11', 12, 21) of a telecommunications network (1).

14. Computer program product having a computer-readable medium and a computer program with program code means, which is stored on the computer-readable medium, which program code means are suitable for ensuring that all steps of a method as claimed in any one of claims 1 to 8 can be carried out when the computer program is executed on a programmable device and/or on a network node (11, 11', 12, 21), in particular in parts on a plurality of network nodes (11, 11', 12, 21) of a telecommunications network (1).

## Revendications

1. Procédé d'optimisation du routage d'un paquet de données dans un réseau de télécommunication (1), un appareil émetteur (2) et un appareil récepteur (3, 3', 3", 3''') étant raccordés au réseau de télécommunication (1), le réseau de télécommunication (1) comprenant plusieurs réseaux partiels (100, 110, 111, 112, 120, 121, 200, 210), le paquet de données étant, dans une première étape de procédé, transmis à partir de l'appareil émetteur (2) vers le réseau de télécommunication (1), une information d'identification de réseau étant, dans une deuxième étape de procédé, ajoutée au paquet de données pour l'identification d'un réseau cible par le réseau de télécommunication (1), le réseau cible étant un réseau partiel, associé à l'appareil récepteur (3, 3', 3", 3'''), des plusieurs réseaux partiels (100, 110, 111, 112, 120, 121, 200, 210) du réseau de télécommunication (1), un routage dédié du paquet de données étant dans une troisième étape de procédé, réalisé à l'intérieur du réseau cible par le réseau de télécommunication (1) en fonction de l'information d'identification de réseau,
le paquet de données étant, exclusivement à l'intérieur du réseau cible, transféré jusqu'à l'appareil récepteur (3, 3', 3", 3''') dans la troisième étape de procédé, en fonction de l'information d'identification de réseau, pendant la réalisation du routage dédié, le réseau cible étant en particulier un réseau partiel (100, 110, 111) des plusieurs réseaux partiels (100, 110, 111, 112, 120, 121, 200, 210) associé à l'appareil émetteur (2).

2. Procédé selon la revendication 1, **caractérisé en ce que**, dans la première étape de procédé, le paquet de données est transmis à un noeud de réseau (11) d'un réseau partiel (100, 110, 111) des réseaux partiels (100, 110, 111, 112, 120, 121, 200, 210) associé à l'appareil émetteur (2), l'information d'identification de réseau étant, dans la deuxième étape de procédé, stipulée par le noeud de réseau (11), le noeud de réseau (11) étant en particulier un routeur, de préférence un routeur Internet-Gateway, d'un fournisseur de services associé à l'appareil émetteur (2).

3. Procédé selon l'une des revendications précédentes, **caractérisé en ce que** le paquet de données comprend une partie de données d'en-tête et une partie de données utiles, la partie de données d'en-tête comportant une information d'adresse cible pour l'adressage de l'appareil récepteur (3, 3', 3", 3''') à l'intérieur du réseau de télécommunication (1), le réseau cible étant déterminé dans la deuxième étape de procédé par le noeud de réseau (11) en fonction de l'information d'adresse cible, l'information d'identification de réseau étant produite par le noeud de réseau (11) en fonction du réseau cible déterminé, l'information d'identification de réseau étant insérée dans la partie de données d'en-tête du paquet de données par le noeud de réseau (11).

4. Procédé selon l'une des revendications précédentes, **caractérisé en ce que** le réseau de télécommunication (1) est un réseau de télécommunication utilisant le protocole Internet (IP) mondial, le paquet de données étant un paquet de données IP, le paquet de données étant, dans la troisième étape de procédé
- transféré par le biais du réseau de télécommunication (1) jusqu'à l'appareil récepteur (3, 3', 3", 3''') quand, en fonction de l'information d'identification de réseau, le réseau de télécommunication utilisant le protocole Internet (IP) mondial est identifié par le réseau de télécommunication (1) comme étant le réseau cible,
- transféré à l'intérieur d'un réseau continental (100, 200) des plusieurs réseaux partiels (100, 110, 111, 112, 120, 121, 200, 210), jusqu'à l'appareil récepteur (3, 3', 3", 3''') quand, en fonction de l'information d'identification de réseau, le réseau continental (100, 200) est identifié par le réseau de télécommunication (1) comme étant le réseau cible,
- transféré, à l'intérieur d'un réseau national (110, 120, 210) des plusieurs réseaux partiels (100, 110, 111, 112, 120, 121, 200, 210), jusqu'à l'appareil récepteur (3, 3', 3", 3''') quand, en fonction de l'information d'identification de réseau, le réseau national (110, 120, 210) est identifié par le réseau de télécommunication (1) comme étant le réseau cible, et/ou
- transféré, à l'intérieur d'un réseau de fournisseur de services (111, 112, 121) des plusieurs réseaux partiels (100, 110, 111, 112, 120, 121, 200, 210), jusqu'à l'appareil récepteur (3, 3', 3", 3''') quand, en fonction de l'information d'identification de réseau, le réseau de fournisseur de services (111, 112, 121) est identifié par le réseau de télécommunication (1) comme étant le réseau cible.

5. Procédé selon l'une des revendications précédentes, **caractérisé en ce qu'**une chaîne de caractères à sept chiffres maximum est utilisée en tant qu'information d'identification de réseau, la chaîne de caractères à sept chiffres maximum étant en particulier une chaîne décimale ou hexadécimale.

6. Procédé selon l'une des revendications précédentes, **caractérisé en ce que** le réseau de télécommunication (1) comporte plusieurs noeuds de réseau (11, 11', 12, 21) pour le transfert du paquet de données à partir de l'appareil émetteur (2) vers l'appareil récepteur (3, 3', 3", 3'''), le paquet de données étant, dans la troisième étape de procédé, transféré à partir du noeud de réseau (11) vers un autre noeud de réseau (11', 12, 21) des plusieurs noeuds de réseau (11, 11', 12, 21), le réseau cible étant déterminé par une logique de l'autre noeud de réseau (11', 12, 21) en fonction de l'information d'identification de réseau, le paquet de données étant, à l'intérieur du réseau cible, en fonction du réseau cible déterminé, transféré jusqu'au terminal (3, 3', 3", 3''').

7. Procédé selon la revendication 6, **caractérisé en ce que** la partie de données d'en-tête comprend un champ de données (30) pour l'enregistrement de l'information d'identification de réseau, le champ de données (30) comprenant un premier élément de champ à un chiffre (31), un deuxième élément de champ à un chiffre (32), un troisième élément de champ à deux chiffres (33) et un quatrième élément de champ à trois chiffres (34), le réseau cible étant, dans la troisième étape de procédé, déterminé par la logique de l'autre noeud de réseau (11', 12, 21) par l'examen séquentiel du premier, deuxième, troisième et/ou quatrième élément de champ (31, 32, 33, 34) du champ de données (30).

8. Procédé selon la revendication 7, **caractérisé en ce que** l'examen séquentiel par la logique est interrompu quand le réseau cible a été identifié clairement par la logique.

9. Réseau de télécommunication (1) destiné à l'optimisation du routage d'un paquet de données dans le réseau de télécommunication (1), le réseau de télécommunication (1) comprenant plusieurs réseaux partiels (100, 110, 111, 112, 120, 121, 200, 210), le réseau de télécommunication (1) comprenant plusieurs noeuds de réseau (11, 11', 12, 21) pour le transfert d'un paquet de données à partir d'un appareil émetteur (2) raccordé au réseau de télécommunication (1) vers un appareil récepteur (3, 3', 3", 3''') raccordé au réseau de télécommunication (1), le réseau de télécommunication (1) étant configuré de telle sorte qu'une information d'identification de réseau est ajoutée au paquet de données pour l'identification d'un réseau cible quand le paquet de données est transmis à partir de l'appareil émetteur (2) vers le réseau de télécommunication (1), le réseau cible étant un réseau partiel, associé à l'appareil récepteur (3, 3', 3", 3'''), des plusieurs réseaux partiels (100, 110, 111, 112, 120, 121, 200, 210) du réseau de télécommunication (1), le réseau de télécommunication (1) étant configuré de telle sorte qu'un routage dédié du paquet de données peut être réalisé à l'intérieur du réseau cible en fonction de l'information d'identification de réseau,
le réseau de télécommunication (1) étant configuré de telle sorte que, en fonction de l'information d'identification de réseau, pendant la réalisation du routage dédié, le paquet de données est transféré jusqu'à l'appareil récepteur (3, 3', 3", 3''') exclusivement à l'intérieur du réseau cible, le réseau cible étant en particulier le réseau partiel (100, 110, 111), associé à l'appareil émetteur (2), des plusieurs réseaux partiels (100, 110, 111, 112, 120, 121, 200, 210).

10. Réseau de télécommunication (1) selon la revendication 9, **caractérisé en ce que** le réseau de télécommunication (1) est configuré de telle sorte qu'une spécification de routage pour la réalisation du routage dédié peut être dérivée de l'information d'identification de réseau par les plusieurs noeuds de réseau (11, 11', 12, 21) du réseau de télécommunication (1).

11. Réseau de télécommunication (1) selon l'une des revendications 9 ou 10, **caractérisé en ce que** le réseau de télécommunication (1) est un réseau de télécommunication (1) utilisant le protocole Internet (IP) mondial, les plusieurs réseaux partiels (100, 110, 111, 112, 120, 121, 200, 210) comprenant un réseau continental (100) rapporté à un continent, un réseau national (110) rapporté à un état et/ou un réseau de fournisseur de services (111) rapporté à un fournisseur de services Internet d'un état, les plusieurs noeuds de réseau (11, 11', 12, 21) étant configurés de telle sorte que, pendant le routage dédié, le paquet de données est, jusqu'à l'appareil récepteur (3, 3', 3", 3'''),
transféré exclusivement par le biais de noeuds de réseau (11, 11') du réseau de fournisseur de services (111) quand l'information d'identification de réseau se rapporte au réseau de fournisseur de services (111), transféré exclusivement par le biais de noeuds de réseau (11, 11', 12) du réseau national (110) quand l'information d'identification de réseau se rapporte au réseau national (110), et/ou
transféré exclusivement par le biais de noeuds de réseau (11, 11', 12, 21) du réseau continental (100) quand l'information d'identification de réseau se rapporte au réseau continental (100).

12. Réseau de télécommunication (1) selon les revendications 9 à 11, **caractérisé en ce que** les plusieurs noeuds de réseau (11, 11', 12, 21) comportent respectivement une logique pour la détermination du réseau cible en fonction de l'information d'identification de réseau, les plusieurs noeuds de réseau (11, 11', 12, 21) étant configurés de telle sorte que, en fonction de l'information d'identification de réseau, le paquet de données est, pendant le routage dédié, transféré jusqu'à l'appareil récepteur (3, 3', 3", 3''') par les plusieurs noeuds de réseau (11, 11', 12, 21) exclusivement à l'intérieur du réseau cible.

13. Programme informatique avec des moyens de code de programme à l'aide desquels toutes les étapes d'un procédé selon l'une des revendications 1 à 8 peuvent être réalisées quand le programme informatique est réalisé sur un équipement programmable et/ou sur un noeud de réseau (11, 11', 12, 21), en particulier dans des parties sur plusieurs noeuds de réseau (11, 11', 12, 21) d'un réseau de télécommunication (1) .

14. Produit de programme informatique avec un support lisible par ordinateur et un programme informatique enregistré sur le support lisible par ordinateur avec des moyens de code de programme qui sont appropriés pour que toutes les étapes d'un procédé selon l'une des revendications 1 à 8 puissent être réalisées quand le programme informatique est exécuté sur un équipement programmable et/ou sur un noeud de réseau (11, 11', 12, 21), en particulier dans des parties sur plusieurs noeuds de réseau (11, 11', 12, 21) d'un réseau de télécommunication (1).
